Europäisches Patentamt

(19) European Patent Office (11) Publication number: **0 080 255**

Office européen des brevets **B1**

(12) **EUROPEAN PATENT SPECIFICATION**

(45) Date of publication of patent specification: **13.05.87** (51) Int. Cl.⁴: **B 60 K 28/00,** A 01 D 34/00, F 02 B 77/08, F 02 B 63/02

(21) Application number: **82304681.8**

(22) Date of filing: **07.09.82**

(54) **Engine control with self-energizing flywheel brake.**

(30) Priority: **16.11.81 US 321769**

(43) Date of publication of application: **01.06.83 Bulletin 83/22**

(45) Publication of the grant of the patent: **13.05.87 Bulletin 87/20**

(84) Designated Contracting States: **DE FR GB IT**

(56) References cited:
**DE-A-2 804 799**
**US-A-3 849 620**
**US-A-3 957 131**
**US-A-4 221 108**
**US-A-4 326 368**

(73) Proprietor: **TECUMSEH PRODUCTS COMPANY 100 East Patterson Street Tecumseh Michigan 49286 (US)**

(72) Inventor: **Kronich, Peter G. 630 Broughton Drive Sheboygan Wisconsin 53081 (US)**

(74) Representative: **Bayliss, Geoffrey Cyril et al BOULT, WADE & TENNANT 27 Furnival Street London EC4A 1PQ (GB)**

Courier Press, Leamington Spa, England.

**Description**

The present invention relates generally to safety devices for internal combustion engine powered implements and more particularly to such safety devices which function to promptly stop the engine in the event that the implement operator moves from his normal operating position.

The need for safety devices for power driven implements to reduce the probability of injury to the operator or others has long been recognized and a wide variety of such safety devices are known. The provision of a protective shield or shroud around dangerous moving parts is commonplace as is the automatic disabling of a dangerous instrumentality when its normal operating mode is interrupted.

A typical illustration of the disabling type safety device is the so-called deadman lever. Such levers are frequently employed on the handle of lawnmowers, garden tillers, snowblowers and the like, and require the operator to be gripping the handle and depressing the lever against a normal spring bias to render the device operational. In the event that the operator releases his grip on the handle, the deadman lever moves typically away from the handle to a position to disable the device. One such known deadman lever disables the ignition circuit on an internal combustion engine rotary lawnmower. Another known deadman lever arrangement is connected to an idler wheel or pulley in the V-belt drive arrangement for a garden tiller with that pulley spring biased toward a position away from the V-belt. Under these conditions the V-belt drive is interrupted since the belt is larger than required to connect the engine to the tiller moving parts and only when the deadman lever is depressed forcing the pulley into engagement with the V-belt and removing slack from the V-belt drive is the tiller operational.

Another known application of a deadman lever to a power driven implement is the interposition of a clutch brake arrangement between the power source such as an internal combustion engine and the dangerous instrumentality such as the rotating blade of a rotary lawnmower or snowthrower. The deadman lever when depressed actuates the clutch to couple the power source to the rotating blade while when the lever is released the clutch is disengaged and a brake actuated to stop the rotary blade.

It would be highly desirable to retain the advantages of the deadman lever type safety device without the necessity of providing a clutch drive between the power source and the dangerous instrumentality and further highly desirable to reduce as far as possible the time interval between the release of the deadman lever and the stopping of the dangerous instrumentality. It would also be highly desirable to provide a safety device wherein the operator must return to his normal operating position before the instrumentality may be re-energised.

U.S.—A—3228177 discloses an internal combustion engine powered implement having a deadman control spring biassed towards a first position and movable by the implement operated to a second position actuating a safety device in the form of a brake having a drum forming the flywheel of the engine and a braking member biassed into frictional engagement with a surface of the flywheel by the spring action on the deadman control. Thus the force between the braking member and the flywheel surfaces the force determined by the spring of the dead man control forcing the two surfaces together and it is the same force which must be overcome by the operator when actuating the dead man lever to disengage the brake.

An object of the present invention is to provide a dead man control operated safety brake for an internal combustion engine in which the braking force which is available to stop the device when the dead man control is released is not limited by consideration of the force needed to be applied by the operator to release the safety brake.

The invention provides a safety brake for an internal combustion engine powered implement having a crankshaft, a dead man control normally biased towards a first position and actuable by an operator to a second position comprising a flywheel coupled to the engine crankshaft for rotation therewith, the flywheel being provided with a cylindrical friction surface generally coaxial with the axis of rotation of the flywheel; a braking member having a second friction surface normally biased into engagement with the flywheel first friction surface; and means coupling the braking member to the dead man control for retracting the second friction surface out of engagement with the first annular friction surface upon movement of the dead man control to the second position by the implement operator; characterised in that the cylindrical friction surface of the flywheel in an inner surface of the flywheel and in that the braking member is so mounted that engagement between the member and flywheel acts to draw the member in a direction to apply an increased braking force against the flywheel, whereby, once engaged, the braking member becomes self actuating until released

Thus the arrangement of the present invention provides a dead man control operated safety brake in which the braking force is dependent upon the speed of engagement between the braking member and the flywheel and the coefficient of friction of the braking member relative to that of the flywheel and in which the brake is self-actuating once the braking member has been engaged with the flywheel.

If the deadman engine has an electric start feature that starting mechanism may be enabled upon movement against an enhanced biasing of the deadman control beyond the running position. This may be accomplished by an intermediate control level acting on a bowden cable coupling the deadman control to the braking mechanism or simply by additional movement of the deadman control. Upon initial engagement between the flywheel braking surface and the friction surface, continued flywheel rotation induces additional movement of the friction surface, wedging that surface against the flywheel and increasing the effective force urging the two friction surfaces together.

In one form of the invention, a safety device for an implement having a rotatable flywheel with an inner cylindrical breaking surface has a braking lever with a friction surface near one end thereof pivotally located within the cylindrical braking surface of the flywheel for pivotal movement about an axis near the other end thereof for selective engagement of the braking and friction surfaces to halt rotation of the flywheel. Continued flywheel rotation again increases the effective force between the braking and friction surfaces to more rapidly halt flywheel rotation.

The following is a description of a specific embodiment of the invention, reference being made to the accompanying drawings in which:

Figure 1 is a side elevation view of a portion of a vertical crankshaft internal combustion engine illustrating the safety device of the present invention in one form;

Figure 2 is an enlarged view of the starter swich and starter switch actuating mechanism of Figure 1;

Figure 3 is an exploded perspective view of a fragment of the engine powered implement, a deadman control, and braking arrangement;

Figure 4 is a view from the top of Figure 1 illustrating the braking mechanism in its brake applied position;

Figure 5 is a view similar to Figure 4 but illustrating the brake arrangement in its ignition kill position; and

Figure 6 is a view similar to Figures 4 and 5 but illustrating the brake mechanism in its run position.

Corresponding parts are identified by corresponding reference characters throughout the several views of the drawing.

The exemplifications set out herein illustrate a preferred embodiment of the invention in one form thereof and such exemplifications are not to be construed as limiting the scope of the disclosure or the scope of the invention in any manner.

Referring first to the drawing generally, an internal combustion engine having a cylinder 11 and flywheel 13 rotatable about the center line 15 of the engine crankshaft powers an implement such as a lawnmower, snowthrower, garden tiller, or the like, with the handle 17 of that implement illustrated. A deadman control lever 19 is gripped by the implement operator, pulling the deadman control lever 19 toward the handle 17 and extracting cable 21 from a sheath 23 of a conventional bowden cable. The other end of sheath 23 is clamped by bolt 25 and bracket 27 of a brake actuating frame 29. Frame 29 is mounted to the engine such as by mounting bolts 31 and 33.

An internal annular rim 35 of flywheel 13 which is generally cylindrical in configuration is selectively engaged by a brake pad 37, carried by a pivotable brake arm or lever 39 which pivots about the axis of pivot pin 41. A rigid link 43 connects the brake arm 39 to a bifurcated lever 45, 47 with portion 47 being connected to the control cable 21. Spring 51 provides the increased spring biasing against which the deadman lever 19 must be pulled in order to engage an electrical starting switch 53, while spring 49 which is of comparatively lighter force is the spring which causes initial engagement between the brake pad 37 and annular rim 35 and is the spring force against which the deadman lever 19 must be maintained during normal implement operation.

As the operator pulls the deadman lever 19 toward the handle 17, cable 21 moves the lever portions 45 and 47 together, pushing the link 43 against the tension of spring 49 so as to rotate the lever 39 about pivot pin 41 in the counterclockwise direction as viewed in Figs. 46, separating brake pad 37 from the annular surface 35. Continued movement of the deadman lever 19 toward handle 17 then disengages tab 55a from the ignition killing switch 55 thereby deactuating it. Still further movement of the deadman control 19 toward handle 17 causes engagement between the tab 59 of frame 29 and surface 57 of lever 39 so that no further relative rotation of the lever 39 occurs. Additional movement of the deadman control then causes relative rotation between the two lever portions 45 and 47 compressing spring 51 until the tab 61 of lever 47 engages and actuates the starting switch 53.

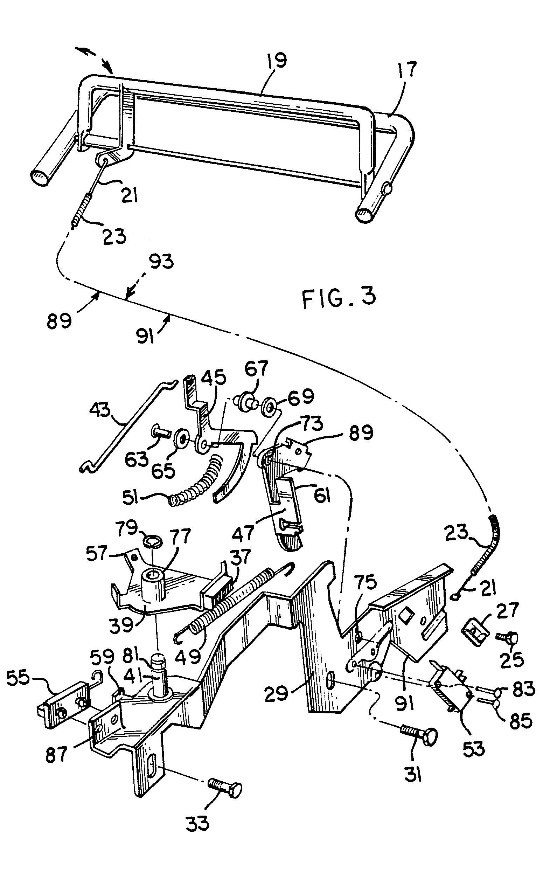

In Fig. 3, it will be noted that the lever portions 45 and 47 are pivotably joined by pin 63 and various washers and bushings 65, 67 and 69 with pin 63 passing through the apertures 71, 73 and 75. Lever arm 39 is fastened to the frame 29 by passing its apertured sleeve 77 over the pivot pin 41 and thereafter engaging snap ring 79 in slot 81. The starting switch 53 is fastened to frame 29 by a pair of screws 83 and 85 while the ignition grounding switch 55 may be crimped in holes such as 87 in the frame or bracket 29. Movement of the deadman control 19 against the spring biasing forces is ultimately limited by the engagement of surface 89 of lever portion 47 with surface 91 of the frame 29.

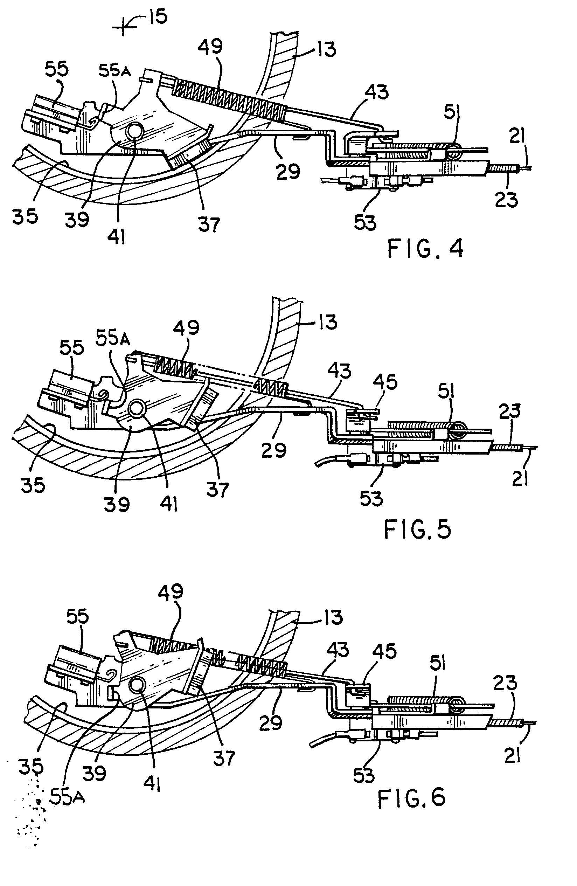

Referring now to Fig. 4, and recalling that the friction surface 37 supporting lever 39 is pivoted at 41, the rotation of flywheel 13 is in the clockwise direction, as viewed, and upon initial contact between the friction surface 37 and friction surface 35, continued flywheel rotation in the clockwise direction tends to rotate the lever 39 clockwise about its axis or pivot pin 41, therefore wedging the two friction surfaces tightly together, increasing the normal force therebetween and rapidly halting flywheel rotation. The effective angle between a tangent to the flywheel and the line joining the center of the pivot pin 41 with the point of engagement between the two friction surfaces is preferably on the order of 45 degrees and cannot, of course, exceed 90 degrees.

In essence then, the brake mechanism uses the internal rim 35 of the engine flywheel for a braking surface, using a pivoting brake arm 39 on a bracket 29 which rotates to engage the braking surface 37 with the rim of the flywheel. Flywheel rotation causes a wedging action which makes the braking force dependent on the speed of engagement and the coefficient of friction of the brake pad 37 relative to the coefficient of friction of the flywheel 13. Typically flywheel 13 is cast of an aluminum alloy. The braking force is then not dependent on the force applied by spring 49 which functions to cause initial engagement between the two braking surfaces but rather is dependent on the wedging action caused by flywheel rotation. As the pad 37 wears, the braking action will increase as the wedging angle changes to create a more positive wedging action. This wear feature results in a more constant stopping time with wear. Additionally, with a greater engine speed, the braking force will increase due to the higher peripheral velocity on initial contact between the braking surfaces, again resulting in a more constant stopping time. The braking tim is, of course, variable within limits, by varying the angle of engagement between the arm 39 and the flywheel.

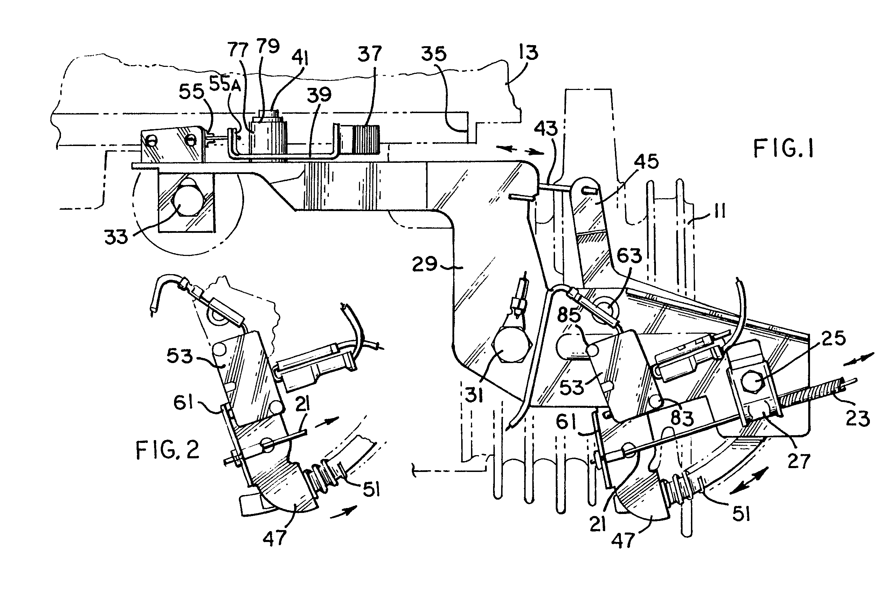

With a single control cable and single control lever 19, as illustrated, the brake and ignition kill functions are controlled by the tension spring 49 while the override or starter switch control cable tension is determined by the spring 51. Spring 51 being a stronger spring then spring 49, the upper and lower lever portions 45 and 47 move together until the brake is completely disengaged and ignition grounding switch 55 open, and then when the tab 59 engages arm 39, a substantially stronger pull by the operator against the force of spring 51 is required to continue counterclockwise movement of the arm 47, as viewed in Figs. 1 and 2, until the tab 61 actuates the starting switch 53. A two lever variation on this concept is possible so that movement of the deadman lever 19 even to its extreme position only results in the release of the braking function and opening of the ignition kill switch. A second lever is positioned along the bowden cable 21 so that the cable is supported at two separated points such as 89 and 91 in Fig. 3, and the separate control lever applies a force along arrow 93 generally perpendicular to the direction of elongation of the bowden cable, displacing the segment between the two support arrows 89 and 91, to effectively decrease the overall length of that cable and further rotate the lever portion 47 so as to actuate starter switch 53.

In summary then, a scheme for starting an electric start internal combustion engine powered implement has been disclosed in conjunction with a unique self-actuating braking system wherein the operator may initially move a control against a first biasing force to release the implement brake and then further move the control to enable the engine ignition system. Still further movement of the control against an increased biasing force allows the operator to engage an engine start-up mechanism and thereafter release the control only against the increased biasing force to a running position. Complete release of the control causes the engine ignition system to first be disabled and thereafter reapplies the brakes so as to stop the engine within a very short time interval. Cable tensions on the order of four pounds and eight pounds, respectively, have been found suitable.

**Claims**

1. A safety device for an internal combustion engine powered implement having a crankshaft, a deadman control normally biased towards a first position and actuable by an operator to a second position comprising;
a flywheel (13) coupled to the engine crankshaft for rotation therewith, the flywheel being provided with a cylindrical friction surface (35) generally coaxial with the axis of rotation of the flywheel;
a braking member (39) having a second friction surface (37) normally biased into engagement with the flywheel first friction surface; and
means (23) coupling the braking member to the deadman control for retracting the second friction surface out of engagement with the first annular friction surface upon movement of the deadman control to the second position by the implement operator;
characterised in that the cylindrical friction surface (35) of the flywheel is an inner surface of the flywheel and in that the braking member (39) is so mounted that engagement between the member and flywheel acts to draw the member in a direction to apply an increased braking force against the flywheel, whereby, once engaged, the braking member becomes self actuating until released.

2. The safety device of Claim 1, characterised in that the implement includes an operator actuable engine starting mechanism actuated by operator movement of the deadman control beyond the second position.

3. The safety device of Claim 1 or Claim 2, characterised in that the braking member has a supporting lever (39) which is pivotably attached near one end thereof to the engine.

4. The safety device of Claim 3, characterised in that pivot means (41) are provided for pivotably mounting the braking member lever (39) adjacent one end thereof, the arrangement being such that upon initial contact between the first and second friction surfaces continued flywheel rotation induces radially outward pivotal movement of the friction surface supporting lever (39) and a corresponding increase in the normal force urging the first (35) and second friction surfaces (37) together.

5. A safety device as claimed in Claim 4, characterised in that spring means (49) are connected to said braking member for normally biasing said braking member friction surface (37) radially outward into engagement with the inner cylindrical surface (35) of the flywheel;

and in that means (23) are provided coupling the braking member (39) to the deadman control (19) for radially retracting the braking member (39) to retract the frictional surface (35) out of engagement with the flywheel inner surface against the force of the spring bias means (49) upon movement of the deadman control from said first position toward the second position.

6. The safety device of Claim 5, characterised in that said spring means (49) also biases said deadman control (19) toward the first position.

7. The safety device of Claim 5 or Claim 6, characterised in that said spring means comprises a coil spring means (49) in engagement with said braking member and biasing said braking member against said flywheel (13), the braking member comprising a friction surface (37) supporting lever (39) pivotally attached near one end of said lever to the engine.

8. A safety device as claimed in any of the preceding Claims, characterised in that electrical switch (55) means are coupled to said deadman control for disabling the engine ignition system when the deadman control is moved in a direction to allow the braking member to pivot toward the flywheel engaging position.

9. The safety device of Claim 8, characterised in that the electrical switch means (55) is coupled to the deadman control (19) through said braking member (39) and is actuated by the movement of the braking member toward the flywheel engaging position.

10. The safety device of any of the preceding Claims, and further comprising a second electrical switch means (53) in an engine electric start circuit, the deadman control (19) being actuable by an implement operator to yet a third position and including means for actuating said second switch means when said deadman control is in the third position for enabling the second electrical switch means for starting the engine.

11. The safety device of Claim 10, characterised in that second bias means (51) are provided connected to said deadman control for yieldably opposing the movement of said deadman control into said third position.

12. The safety device of Claim 11, characterised in that said first spring bias means (49) exerts a resistance force of a first level on the deadman control resisting movement of the deadman control (19) toward said second position, and said second bias means (51) exerts a resistance force of a second level, significantly greater than said first level on the deadman control (19), resisting movement of the deadman control into the third position.

13. The safety device of Claim 12, characterised in that said second bias means (51) is a spring bias means.

14. A method of starting an internal combustion engine having a safety device as claimed in any of Claims 11 to 13 comprising the steps of:

initially moving the control (19) against a biasing force to release the braking member (39);

further moving the control (19) to enable the engine ignition system (55);

still further moving the control (19) against an increased biasing force to enable the engine starting mechanism (53); and

releasing the control from the increase biasing force to a running position.

15. The safety device of Claim 14, characterised in that the control includes a Bowden cable (23) and the step of still further moving includes applying a force (93) generally perpendicularly to the direction of elongation of the Bowden cable to displace laterally a segment (89—91) of the cable to decrease effectively the overall length of the cable.

**Patentansprüche**

1. Sicherheitsvorrichtung für eine brennkraftgetriebene Einheit mit einer Kurbelwelle, einer Toten-Mann-Regelung, die normalerweise in eine erste Position beeinflußt und durch eine Bedienungsperson in eine zweite Position betätigbar ist, umfassend

ein Schwungrad (13), das an die Motor-Kurbelwelle drehfest angekoppelt ist und das mit einer zylindrischen Reibfläche (35) versehen ist, die im wesentlichen koaxial zur Drehachse des Schwungrades verläuft;

ein Bremsorgan (39) mit einer zweiten Reibfläche (37), die normalerweise in Eingriff mit der ersten Reibfläche des Schwungrades gebracht wird; und

Mittel (23) zum Ankoppeln des Bremsorganes an die Toten-Mann-Regelung zum Zurückziehen der zweiten Reibfläche außer Eingriff von der ersten ringförmigen Reibfläche bei Bewegung der Toten-Mann-Kontrolle in die zweite Position durch die Bedienungsperson der Einheit;

dadurch gekennzeichnet, daß die zylindrische Reibfläche (35) des Schwungrades eine Innenfläche des Schwungrades ist, und daß das Bremsorgan (39) derart montiert ist, daß ein Eingriff zwischen dem Organ und dem Schwungrad zu einem Zurückziehen des Organes in eine solche Richtung führt, daß eine gesteigerte Bremskraft auf das Schwungrad einwirkt, wobei das Bremsorgan, sobald es einmal im Eingriff steht, bis zum Lösen selbstbetätigend wirkt.

2. Vorrichtung nach Anspruch 1, dadurch gekennzeichnet, daß die Einheit einen von der Bedienungsperson betätigbaren Motorstarter umfaßt, der durch Betätigung der Toten-Mann-Regelung mittels Bewegung durch die Bedienungsperson außerhalb der zweiten Position verbracht wird.

3. Sicherheitsvorrichtung nach Anspruch 1 oder 2, dadurch gekennzeichnet, daß das Bremsorgan einen Traghebel (39) umfaßt, der im Bereich seines einen Endes schwenkbar an dem Motor angelenkt ist.

4. Sicherheitsvorrichtung nach Anspruch 3, dadurch gekennzeichnet, daß ein Schwenkzapfen (41) vorgesehen ist, um den Hebel (39) des Bremsorganes im Bereich seines einen Endes zu lagern, und daß die Anordnung derart getroffen ist, daß bei anfänglichem Kontakt zwischen der ersten und der zweiten Reibfläche ein fortgesetztes Umlaufen des Schwungrades zu einer radial nach außen gerichteten Schwenkbewegung des Reibflächentraghebels (39) und zu einem entsprechenden Anwachsen der Normalkraft führt, die die erste (35) und die zweite (37) Reibfläche zueinander bringt.

5. Sicherheitsvorrichtung nach Anspruch 4, dadurch gekennzeichnet, daß mit dem Bremsorgan eine Feder (49) verbunden ist, um die Reibfläche (37) des Bremsorganes normalerweise in eine Richtung radial nach außen und in Eingriff mit der inneren zylindrischen Fläche (35) des Schwungrades zu verbringen;

und daß Mittel (23) vorgesehen sind, die das Bremsorgan (39) an die Toten-Mann-Regelung (19) ankoppeln, um das Bremsorgan (39) radial zurückzuziehen, um die Reibfläche (35) außer Eingriff mit der Innenfläche des Schwungrades zu bringen, und zwar entgegen der Kraft der Feder (49) bei Bewegung der Toten-Mann-Regelung aus der ersten Position in die zweite Position.

6. Sicherheitsvorrichtung nach Anspruch 5, dadurch gekennzeichnet, daß die Feder (49) ferner die Toten-Mann-Regelung (19) in die erste Position verbringt.

7. Sicherheitsvorrichtung nach Anspruch 5 oder 6, dadurch gekennzeichnet, daß die Feder eine Schraubenfeder (49) umfaßt, die mit dem Bremsorgan in Eingriff steht und dieses gegen das Schwungrad (13) drückt, und daß das Bremsorgan einen Reibflächen (37) — Traghebel (39) umfaßt, der im Bereich seines einen Endes mit dem Motor verbunden ist.

8. Sicherheitsvorrichtung nach einem der vorausgegangenen Ansprüche, dadurch gekennzeichnet, daß ein elektrischer Schalter (55) an die Toten-Mann-Regelung angeschlossen ist, um das Motorzündsystem dann außer Betrieb zu setzen, wenn die Toten-Mann-Regelung in einer Richtung bewegt wird, die das Bremsorgan in die Schwungrad-Eingriffposition schwenken läßt.

9. Sicherheitsvorrichtung nach Anspruch 8, dadurch gekennzeichnet, daß der elektrische Schalter (55) über das Bremsorgan (39) an die Toten-Mann-Regelung (19) angeschlossen und durch die Bewegung des Bremsorganes in die Eingriffsposition mit dem Schwungrad verbracht wird.

10. Sicherheitsvorrichtung nach einem der vorausgegangenen Ansprüche, weiterhin umfassend einen zweiten elektrischen Schalter (53) in einer elektrischen Motorstarterschaltung, wobei die Toten-Mann-Regelung (19) durch eine Bedienungsperson der Einheit in eine dritte Position bewegbar ist, umfassend Mittel zum Betätigen des zweiten Schalters, dann, wenn die Toten-Mann-Regelung sich in der dritten Position befindet, so daß der zweite elektrische Schalter das Anlassen des Motors betätigt.

11. Sicherheitsvorrichtung nach Anspruch 10, dadurch gekennzeichnet, daß eine zweite Andrückvorrichtung (51) vorgesehen ist, die mit der Toten-Mann-Regelung zusammengeschaltet ist, um elastisch der Bewegung der Toten-Mann-Regelung in die dritte Position entgegenzuwirken.

12. Sicherheitsvorrichtung nach Anspruch 11, dadurch gekennzeichnet, daß die erste Feder (49) eine Widerstandskraft eines ersten Hebels auf die Toten-Mann-Regelung ausübt, die der Bewegung der Toten-Mann-Regelung (19) zur zweiten Position hin entgegenwirkt, und daß die zweite Andrückvorrichtung (51) eine Widerstandskraft eines zweiten Hebel ausübt, die wesentlich größer als diejenige des ersten hebels auf die Toten-Mann-Regelung (19) ist, und die der Bewegung der Toten-Mann-Regelung in die dritte Position entgegenwirkt.

13. Sicherheitsvorrichtung nach Anspruch 12, dadurch gekennzeichnet, daß die zweite Andrückvorrichtung (51) eine Feder ist.

14. Verfahren zum Starten einer Brenkraftmaschine mit einer Sicherheitsvorrichtung nach einem der Ansprüche 11 bis 13, umfassend die folgenden Verfahrensschritte:

anfängliches Bewegen der Regelung (19) gegen eine Andrückkraft, um das Bremsorgan (39) zu lösen;

weiteres Bewegen der Regelung (19), um das Motorzündsystem (55) wirksam zu machen;

weiteres Bewegen der Regelung (19) gegen die gesteigerte Anpreßkraft, um den Motorstarter (53) wirksam zu machen; und

Freigeben der Regelung von der vergrößerten Andrückkraft in eine Marschposition.

15. Sicherheitsvorrichtung nach Anspruch 14, dadurch gekennzeichnet, daß die Regelung eine Bowdenzug (23) umfaßt, und daß der Verfahrensschritt des weiteren Bewegens das Aufbringen einer Kraft (93) einschließt, die im wesentlichen senkrecht zur Richtung der Längung des Bowdenzug ist, um einen Abschnitt (89—91) des Zuges nach der Seite zu verschieben, und um damit die Gesamtlänge des Zuges wirksam zu verringern.

**Revendications**

1. Dispositif de sécurité pour outil entraîné par un moteur à combustion interne, comportant un arbre de manivelle, une commande d'homme mort normalement poussée vers une première position et pouvant être manoeuvrée par un opérateur pour passer dans une seconde position, comprenant:

— un volant (13) couplé à l'arbre de manivelle du moteur pour tourner avec celui-ci, le volant étant muni d'une surface de frottement cylindrique (35) généralement coaxial à l'axe de rotation du volant;

— un élément de freinage (39) présentant une seconde surface de frottement (37) normalement poussée en contact avec la première surface de frottement du volant; et

— des moyens (23) couplant l'élément de freinage à la commande d'homme mort pour rétracter la seconde surface de frottement en la dégageant du contact avec la première surface de frottement annulaire lorsque la commande d'homme mort passe dans la seconde position sous l'action de l'opérateur de l'outil;

dispositif de sécurité caractérisé en ce que la surface de frottement cylindrique (35) du volant est constituée par une surface intérieure de ce volant, et en ce que l'élément de freinage (39) est monté de façon que l'engagement entre cet élément et le volant agisse de manière à tirer l'élément dans une direction permettant d'appliquer une force de freinage plus importante contre le volant, grâce à quoi, lorsqu'il est engagé, l'élément de freinage devient auto-excité jusqu'à ce qu'il soit libéré.

2. Dispositif de sécurité selon la revendication 1, caractérisé en ce que l'outil comprend un mécanisme de démarrage du moteur manoeuvrable par l'opérateur, ce mécanisme étant manoeuvré par le mouvement de l'opérateur entraînant la commande d'homme mort au-delà de la seconde position.

3. Dispositif de sécurité selon l'une quelconque des revendications 1 et 2, caractérisé en ce que l'élément de freinage comporte un levier de support (39) monté en pivotement sur le moteur au voisinage de l'une de ses extrémités.

4. Dispositif de securité selon la revendication 3, caractérisé en ce que des moyens de pivot (44) sont utilisés pour monter en pivotement le levier (39) de l'élément de freinage au voisinage de l'une de ses extrémités, la disposition étant telle qu'au moment du contact initial entre les première et seconde surfaces de frottement, la poursuite de la rotation du volant produise un mouvement de pivotement radial extérieur du levier de support (39) de la surface de pivotement, et une augmentation correspondante de la force normale poussant la première surface de frottement (35) contre la seconde surface de frottement (37).

5. Dispositif de sécurité selon la revendication 4, caractérisé en ce que des moyens de ressort (49) sont reliés à l'élément de freinage pour pousser normalement radialement vers l'extérieur la surface de frottement (37) de l'élément de freinage de manière à l'amener en contact avec la surface cylindrique intérieure (35) du volant; et en ce que des moyens (23) sont utilisés pour coupler l'élément de freinage (39) à la commande d'homme mort (19) de manière à rétracter radialement l'élément de freinage (39) pour rétracter la surface de frottement (35) de manière à la dégager du contact avec la surface intérieure du volant, en repoussant la force des moyens de poussée à ressort (49) lorsque la commande d'homme mort se déplace pour passer de la première position à la seconde position.

6. Dispositif de sécurité selon la revendication 5, caractérisé en ce que les moyens de ressort (49) poussent également la commande d'homme mort (19) vers la première position.

7. Dispositif de sécurité selon l'une quelconque des revendications 5 et 6, caractérisé en ce que les moyens de ressort comprennent des moyens de ressort hélicoïdal (49) en contact avec l'élément de freinage pour pousser cet élément de freinage contre le volant (13), l'élément de freinage présentant une surface de frottement (37) supportant le levier (39) monté en pivotement sur le moteur au voisinage de l'une des extrémités de ce levier.

8. Dispositif de sécurité selon l'une quelconque des revendications précédentes, caractérisé en ce que des moyens d'interrupteur électrique (55) sont couplés à la commande d'homme mort pour couper le système d'allumage du moteur lorsque la commande d'homme mort est déplacée dans une direction permettant à l'élément de freinage de pivoter en direction de la position d'engagement avec le volant.

9. Dispositif de sécurité selon la revendication 8, caractérisé en ce que les moyens d'interrupteur électrique (55) sont couplés à la commande d'homme mort (19) par l'intermédiaire de l'élément de freinage (39), et sont actionnés par le mouvement de l'élément de freinage en direction de la position d'engagement contre le volant.

10. Dispositif de sécurité selon l'une quelconque des revendications précédentes, caractérisé en ce qu'il comprend en outre des seconds moyens d'interrupteur électrique (53) montés dans un circuit de démarrage électrique du moteur, la commande d'homme mort (19) pouvant être manoeuvrés par l'opérateur de l'outil jusqu'à une troisième position encore, et comprenant des moyens permettant de manoeuvrer les seconds moyens d'interrupteur lorsque la commande d'homme mort se trouve dans la troisième position, de manière à déclencher les seconds moyens d'interrupteur électrique pour faire démarrer le moteur.

11. Dispositif de sécurité selon la revendication 10, caractérisé en ce que des seconds moyens de poussée (51) sont reliés à la commande d'homme mort pour s'opposer élastiquement au mouvement de cette commande d'homme mort vers la troisième position.

12. Dispositif de sécurité selon la revendication 11, caractérisé en ce que les premiers moyens de poussée à ressort (49) exercent une force de résistance d'un premier niveau sur la commande d'homme mort pour résister au mouvement de cette commande d'homme mort (19) vers la seconde position, et en ce que les seconds moyens de poussée (51) exercent une force de résistance d'un second niveau, nettement supérieur au premier niveau, sur la commande d'homme mort (19) pour résister au mouvement de cette commande d'homme mort vers la troisième position.

13. Dispositif de sécurité selon la revendication 12, caractérisé en ce que les seconds moyens de poussée (51) sont constitués par des moyens de poussée à ressort.

14. Procédé de démarrage d'un moteur à combustion interne muni d'un dispositif de sécurité selon l'une quelconque des revendications 11 à 13, procédé caractérisé en ce qu'il comprend les différentes étapes consistant à:

— déplacer initialement la commande (19) contre une force de poussée pour libérer l'élément de freinage (39);

— poursuivre le déplacement de la commande (19) pour déclencher le système d'allumage (55) du moteur;

— poursuivre encore le déplacement de la commande (19) contre une force de poussée plus importante, pour déclencher le mécanisme de démarrage (53) du moteur; et

— libérer la commande de la force de poussée plus importante pour venir en position de marche.

15. Dispositif de sécurité selon la revendication 14, caractérisé en ce que la commande comprend un câble Bowden (23), et en ce que l'étape de déplacement final consiste à appliquer une force (93) généralement perpendiculaire au sens de la longueur du câble Bowden, pour déplacer latéralement un segment (89—91) du câble, de manière à diminuer effectivement la longueur totale du câble.

FIG. I

FIG. 2

0 080 255

FIG. 3

FIG. 4

FIG.5

FIG.6